Europäisches Patentamt

European Patent Office

Office européen des brevets

(19)

(11) **EP 0 451 043 B1**

(12) **FASCICULE DE BREVET EUROPEEN**

(45) Date de publication et mention
de la délivrance du brevet:
**06.11.1996 Bulletin 1996/45**

(51) Int. Cl.$^6$: **C04B 35/80**, C04B 41/45

(21) Numéro de dépôt: **91400885.9**

(22) Date de dépôt: **02.04.1991**

(54) **Procédé de réalisation d'un matériau composite thermostructural à interphase carbone entre fibres de renfort et matrice**

Verfahren zur Herstellung eines Verbundmaterials mit einer Kohlenstoffzwischenschicht zwischen den verstärkenden Fasern und der Matrix für Hochtemperaturanwendung

Process for production of a thermostructural composite material with carbon intermediary phase between the reinforcing fibres and the matrix

(84) Etats contractants désignés:
**DE GB IT**

(30) Priorité: **02.04.1990 FR 9004198**

(43) Date de publication de la demande:
**09.10.1991 Bulletin 1991/41**

(73) Titulaire: **SOCIETE EUROPEENNE DE PROPULSION**
**92150 Suresnes (FR)**

(72) Inventeurs:
• **Heraud, Louis**
**F-33200 Bordeaux (FR)**
• **Rocher, Jean-Philippe**
**F-33160 Saint Medard en Jalles (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
**EP-A- 0 121 797          EP-A- 0 127 491**
**EP-A- 0 172 082          WO-A-80/02818**
**FR-A- 2 602 505          FR-A- 2 640 258**

• **CHEMICAL ABSTRACTS, vol. 106, no. 8, février 1987 Columbus, Ohio, USA K.Nakano et al.: "Silicon Carbide Fibre-reinforced Carbon Composites" page 298; colonne de gauche; ref. no. 54837D**
• **CERAMIC ENGINEERING AND SCIENCE PROCEEDINGS. vol. 9, no. 7-8, juin 1988, AMERICAN CERAMIC SOCIETY INC. US pages 705 - 721; R.A.LOWDEN ET AL.: "Interface Modification in Nicalon/SiC Composites"**

EP 0 451 043 B1

## Description

La présente invention concerne un procédé de réalisation d'un matériau composite thermostructural, comprenant la fabrication d'une préforme fibreuse à partir de fibres réfractaires, et la densification de la préforme par une matrice également réfractaire, tout en ménageant une interphase carbone entre les fibres et la matrice.

Un matériau composite thermostructural est constitué d'une préforme fibreuse et d'une matrice qui lui confèrent des propriétés mécaniques élevées et qui permettent la conservation de ces propriétés mécaniques à des températures élevées.

Le procédé selon l'invention est applicable quel que soit le type de préforme fibreuse. Celle-ci peut être réalisée par assemblage de fibres courtes, donnant par exemple un feutre, ou par bobinage de fibres. La texture peut aussi consister en une superposition ou bobinage de strates unidirectionnelles (1D) ou bi-directionnelles (2D) formées par des torons, câbles ou fils constitués chacun par assemblage de fibres. Il est également possible d'utiliser des préformes tridirectionnelles (3D) telles qu'obtenues par aiguilletage de strates superposées ou bobinées, ou par tissage tridimensionnel.

Les fibres réfractaires formant la préforme sont choisies parmi toutes les fibres susceptibles de supporter, sans modification ou dégradation fondamentale, une température d'au moins 800°C dans une atmosphère non réactive avec la fibre, par exemple des fibres carbone, ou des fibres céramique (carbure de silicium, alumine, zircone...).

Quant au matériau réfractaire constitutif de la matrice, il peut comporter toute composition réfractaire céramique du type oxyde, carbure, borure, nitrure..., ainsi que du carbone.

L'invention vise plus particulièrement les matériaux composites à matrice céramique ou au moins en partie céramique (CMC). Ceux-ci sont utilisés dans des applications qui requièrent des propriétés thermomécaniques élevées, par exemple des pièces de moteurs ou de réacteurs, ou des éléments de structure de véhicules spatiaux exposés à des échauffements importants.

Dans un CMC, la matrice présente en elle-même un faible allongement à rupture, une résistance en traction peu élevée et une grande sensibilité à l'entaille, en raison de son caractère céramique. L'obtention d'un matériau peu sensible aux chocs et à la propagation des fissures requiert une liaison fibre-matrice faible afin qu'une fissure parvenant à l'interface fibre-matrice ne se prolonge pas à travers la fibre en provoquant la rupture de celle-ci.

Par contre, il est connu que l'obtention de propriétés mécaniques élevées, notamment en résistance en flexion, demande une liaison entre les fibres et la matrice plutôt élevée afin d'assurer une transmission des efforts vers les fibres du renfort.

Un très bon compromis entre ces exigences a priori contradictoires a été trouvé en interposant entre les fibres et la matrice un revêtement intermédiaire, ou interphase, de faible épaisseur ayant une résistance en cisaillement inférieure à celle de la matrice, afin de permettre une relaxation des contraintes à fond de fissure lorsqu'une fissure de la matrice arrive au voisinage d'une fibre. Cette interphase est, par exemple, constituée par un matériau à structure en feuillets, tel que du pyrocarbone laminaire ou du nitrure de bore, comme décrit dans le document FR-A-2 567 874.

Selon le procédé décrit dans ce document, l'interphase est déposée sur les fibres par infiltration chimique en phase vapeur au sein de la préforme, avant mise en place de la matrice. Il est donc nécessaire de procéder à une ou plusieurs opérations entre la fabrication de la préforme et la formation de la matrice. Or, les opérations d'infiltration chimique en phase vapeur sont généralement longues et requièrent des installations complexes.

Aussi, la présente invention a-t-elle pour but de fournir un procédé grâce auquel la génération de l'interphase entre fibres et matrice est plus simple et plus rapide, permettant de diminuer le temps d'utilisation des installations d'infiltration, donc le coût de fabrication des matériaux composites, sans que leurs propriétés mécaniques et thermiques soient perturbées de façon significative.

Ce but est atteint du fait que, conformément à l'invention, la préforme fibreuse est réalisée à partir de fibres réfractaires revêtues d'un ensimage susceptible de laisser un résidu en carbone par dégradation thermique, l'interphase carbone étant obtenue par dégradation thermique de l'ensimage.

L'interphase carbone est engendrée par traitement thermique effectué après fabrication de la préforme. Le traitement est effectué sous atmosphère inerte et à une température suffisante (en général supérieure à 300°C) pour pyrolyser l'ensimage. Cette température doit, bien entendu, ne pas dépasser la limite à partir de laquelle la fibre commence à se dégrader.

Avantageusement, lorsque la matrice est au moins en partie formée par infiltration chimique en phase vapeur réalisée dans une enceinte dans laquelle est disposée la préforme, le traitement thermique de l'ensimage est réalisé lors de la montée en température de l'enceinte en vue de l'infiltration chimique en phase vapeur d'un matériau céramique constitutif de la matrice.

La matrice peut aussi être au moins en partie formée par imprégnation de la préforme au moyen d'un précurseur de la matrice suivie d'un traitement thermique donnant un matériau céramique constitutif de la matrice par transformation du précurseur. Dans ce cas, avantageusement, la préforme réalisée à partir des fibres revêtues de l'ensimage est imprégnée par le précurseur de la matrice avant traitement thermique donnant à la fois l'interphase carbone par dégradation de l'ensimage et le matériau céramique de la matrice par transformation du précurseur.

Ainsi, que la matrice soit formée par voie gazeuse ou par voie liquide, l'interphase carbone peut être avantageusement engendrée lors du processus de formation de la matrice, sans demander d'opérations complémentaires.

Le procédé selon l'invention requiert l'utilisation de fibres revêtues d'un ensimage susceptible de laisser un résidu en carbone par dégradation thermique, c'est-à-dire ayant un taux de coke non négligeable. Il n'en est pas ainsi avec les ensimages habituellement utilisés pour les fibres réfractaires, tels les acétates de polyvinyle, alcools polyvinyliques ou époxy ayant des taux de coke nuls ou faibles. En outre, il pouvait, au moins dans certains cas, être nécessaire d'éliminer l'ensimage traditionnel avant la formation de l'interphase : opération dont le procédé conforme à l'invention permet de faire l'économie.

Différents types d'ensimage peuvent être utilisés pour la mise en oeuvre du procédé selon l'invention. D'une façon générale, l'ensimage sera choisi parmi des polymères à longues chaînes carbonées, tels que ceux utilisés comme précurseurs pour la fabrication de fibres de carbone. Le taux de coke devra être suffisant pour laisser, après traitement thermique, un revêtement sensiblement continu sur les fibres élémentaires. De préférence, le taux de coke devrait être au moins égal à 20 % (pourcentage en poids du résidu carbone par rapport au poids de l'ensimage). A titre de comparaison, les taux de coke, après traitement thermique à 900°C, d'ensimages en acétate de polyvinyle ou époxy habituellement utilisés sont respectivement de 0 % et de 5,7 %.

L'ensimage peut notamment être choisi parmi les polymères phénoliques, les polymères acryliques et les polymères cellulosiques ayant des taux de coke généralement compris entre 20 et 60 % en poids. Parmi ces derniers, peuvent notamment être choisis des carboxyméthylcelluloses dont l'utilisation comme ensimage est connue en soi.

Le procédé selon l'invention est également utilisable pour la réalisation de matériaux composites à matrice séquencée suivant un processus comprenant la fabrication d'une préforme fibreuse au moyen de torons ou fils formés de fibres réfractaires revêtues d'un ensimage, et la densification de la préforme par une matrice séquencée en partie céramique, avec une première interphase carbone formée entre les fibres et la matrice et au moins une deuxième interphase formée entre deux phases céramiques de la matrice. Dans ce cas, conformément à l'invention, la préforme est réalisée à partir de fibres réfractaires revêtues d'un ensimage susceptible de laisser un résidu en carbone convenable par dégradation thermique, les torons ou fils étant revêtus, avant formation de la matrice, par un produit entourant chaque toron ou fil et susceptible de donner le matériau constitutif de la deuxième interphase par traitement thermique, la première interphase carbone et la deuxième interphase étant réalisées par un traitement thermique donnant à la fois la première interphase par dégradation de l'ensimage et la deuxième interphase par transformation du produit de revêtement des torons ou fils.

Les torons ou fils peuvent être revêtus d'un produit susceptible de laisser un résidu en carbone par traitement thermique, de manière à former une deuxième interphase également en carbone.

Comme précédemment, lorsque la matrice est formée au moins en partie par infiltration chimique en phase vapeur, le traitement thermique donnant en même temps la première et la deuxième interphase est avantageusement réalisé lors de la montée en température de l'enceinte dans laquelle la préforme est disposée en vue de l'infiltration chimique en phase vapeur. L'infiltration du matériau céramique constitutif de la matrice est ensuite réalisée, notamment au sein de la porosité résiduelle dans chaque toron ou fil afin de constituer une phase céramique entre la première et la deuxième interphase.

Lorsque la matrice est au moins en partie formée par voie liquide, l'imprégnation de la préforme par un précurseur de la matrice est réalisée après le traitement thermique ayant donné la première et la deuxième interphase, cette imprégnation est notamment réalisée au sein de la porosité résiduelle dans chaque toron ou fil. De la sorte, une phase céramique entre la première et la deuxième interphase est formée lors d'un deuxième traitement thermique par lequel le matériau céramique constitutif de la matrice est obtenu par transformation du précurseur.

Différents exemples de mise en oeuvre du procédé selon l'invention sont donnés ci-après, à titre indicatif mais non limitatif, ainsi que des exemples comparatifs.

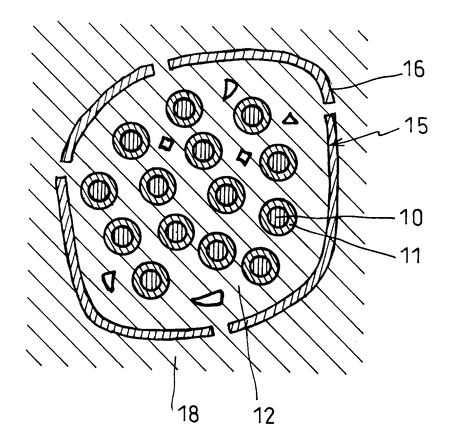

La figure unique du dessin annexé illustre de façon très schématique la formation de deux interphases dans le cadre de l'application du procédé selon l'invention à la réalisation d'un matériau composite à matrice séquencée.

Dans tous les exemples qui suivent, les fibres utilisées pour la fabrication de la préforme fibreuse sont des fibres de carbure de silicium revêtues d'un ensimage en carboxyméthylcellulose dont le taux de coke à 900°C est de 33 %.

Exemple 1

Une préforme fibreuse unidirectionnelle (1D) en fibres de carbure de silicium revêtues d'un ensimage carboxyméthylcellulose est fabriquée par bobinage filamentaire de ces fibres autour d'un outillage permettant de maintenir alignées les fibres suivant des sections planes.

La préforme est placée dans un four d'infiltration chimique en phase vapeur pour être densifiée par une matrice en carbure de silicium. L'infiltration chimique en phase vapeur de carbure de silicium au sein d'une préforme fibreuse est une opération bien connue. On pourra se référer au document FR-A-2 401 888.

Avant injection de la phase gazeuse dans le four, la préforme est portée à la température voulue pour l'opération d'infiltration, c'est-à-dire environ 1 000°C. Pendant cette phase de montée en température, la préforme est maintenue dans le four dans une atmosphère inerte, par exemple un vide partiel d'azote. L'ensimage des fibres se trouve donc pyrolysé avant le début de la formation de la matrice, laissant sur les fibres un dépôt en carbone destiné à constituer l'interphase entre fibres et matrice.

La densification de la préforme est ensuite commencée, puis poursuivie jusqu'à atteindre un taux de porosité résiduelle d'environ 10 % en volume.

Un essai en flexion effectué sur le matériau composite ainsi obtenu (1D-SiC/SiC à interphase C issue de la dégradation thermique de l'ensimage) donne une valeur de résistance en flexion $R_f$ = 950 MPa.

Exemple comparatif 1a

Il est procédé comme dans l'exemple 1 en utilisant des fibres revêtues d'un ensimage en acétate de polyvinyle de taux de coke égal à 0 % à la place de l'ensimage carboxyméthylcellulose. L'ensimage est totalement éliminé lors de la phase de montée en température précédant l'infiltration du carbure de silicium.

La résistance $R_f$ mesurée lors de l'essai en flexion n'est que de 750 MPa, soit environ 20 % inférieure à la précédente.

Exemple comparatif 1b

Il est procédé comme dans l'exemple 1a, avec formation d'une interphase par infiltration en phase vapeur de pyrocarbone laminaire, avant formation de la matrice, conformément au procédé décrit dans le document FR-A-2 567 874 précité. L'ensimage est totalement éliminé lors de la montée en température précédant la formation de l'interphase pyrocarbone.

La résistance $R_f$ mesurée lors de l'essai en flexion est de 1 000 MPa.

Le procédé conforme à l'invention permet donc d'obtenir une résistance en flexion très voisine de celle obtenue avec dépôt d'une interphase en pyrocarbone par infiltration chimique en phase vapeur, sans qu'il soit nécessaire de procéder à cette opération.

Exemple 2

Une préforme fibreuse bidirectionnelle (2D) en fibres de carbure de silicium revêtues d'un ensimage carboxyméthylcellulose est fabriquée comme suit :

- empilement à plat de strates de tissu de fibres SiC commercialisées sous la référence "Nicalon" par la société japonaise Nippon Carbon, et
- maintien de l'empilement des strates dans un outillage de façon à assurer un taux volumique de fibres de l'ordre de 40 %.

La préforme est placée dans un four d'infiltration chimique en phase vapeur pour être densifiée par une matrice en carbure de silicium. La densification est réalisée comme dans l'exemple 1, l'ensimage étant pyrolysé lors de la montée en température précédant l'infiltration du carbure de silicium.

Un essai en traction est effectué sur le composite final au cours duquel sont mesurés la contrainte à rupture en traction $\sigma_R$, le module d'élasticité E et l'allongement à rupture en traction $\varepsilon_R$. Les résultats obtenus sont les suivants :

$$\sigma_R = 170 \text{ MPa}$$

$$E = 210 \text{ GPa}$$

$$\varepsilon_R = 0{,}35 \text{ %}$$

Exemple comparatif 2a

Il est procédé comme dans l'exemple 2 en utilisant des fibres revêtues d'un ensimage en acétate de polyvinyle de taux de coke égal à 0 % à la place de l'ensimage carboxyméthylcellulose. L'ensimage est totalement éliminé lors de la phase de montée en température précédant l'infiltration du carbure de silicium.

Un essai en traction effectué dans les mêmes conditions que dans l'exemple 4 donne les résultats suivants :

$$\sigma_R = 140 \text{ MPa}$$

$$E = 230 \text{ GPa}$$

$$\varepsilon_R = 0{,}12 \text{ %}$$

Exemple comparatif 2b

Il est procédé comme dans l'exemple 2a, avec formation d'une interphase par infiltration en phase vapeur de pyrocarbone laminaire, avant formation de la matrice, conformément au procédé décrit dans le document FR-A-2 567 874 précité. L'ensimage est totalement éliminé lors de la montée en température précédant la formation de l'interphase pyrocarbone.

Un essai en traction effectué dans les mêmes conditions que dans l'exemple 4 donne les résultats suivants :

$$\sigma_R = 170 \text{ MPa}$$

$$E = 210 \text{ GPa}$$

$$\varepsilon_R = 0{,}3 \text{ %}$$

Comme précédemment, on observe que le procédé conforme à l'invention permet d'obtenir les propriétés mécaniques recherchées pour ces composites (haute résistance et fort allongement à rupture) du même ordre de grandeur que celles obtenues avec dépôt d'une interphase en pyrocarbone par infiltration chimique en phase vapeur, sans qu'il soit nécessaire de procéder à cette opération qui est onéreuse.

Exemple 3

Cet exemple concerne la fabrication d'un matériau composite à matrice séquencée, plus particulièrement d'un matériau dans lequel la matrice comprend au moins deux phases céramique séparées par une interphase en un matériau ayant un allongement à rupture supérieur à celui du matériau constitutif des phases céramique. Un tel matériau est décrit dans la demande de brevet français déposée sous le numéro FR 89 02718.

Une préforme fibreuse 2D est fabriquée par imprégnation d'un tissu à base de fibres SiC revêtues d'un ensimage carboxyméthylcellulose par un produit susceptible de donner, par dégradation thermique, le matériau souhaité pour former une interphase entre deux phases céramique de la matrice. Ce matériau étant par exemple du carbone, le produit d'imprégnation est choisi parmi des polymères à taux de coke non négligeable. Typiquement, le produit d'imprégnation peut être choisi parmi les mêmes polymères que ceux utilisables comme ensimage des fibres dans le cadre de la présente invention. Dans l'exemple considéré, la préforme est imprégnée de carboxyméthylcellulose, c'est-à-dire du même produit que celui constitutif de l'ensimage des fibres.

Les conditions d'imprégnation sont choisies de telle sorte que le produit d'imprégnation revêt chaque toron ou fil de la préforme, sans s'infiltrer au sein de ces torons ou fils qui sont formés chacun d'une multitude de fibres élémentaires. Ceci est obtenu en réalisant l'imprégnation sous pression atmosphérique, par exemple par simple trempage, et en utilisant un produit d'imprégnation ayant une viscosité suffisamment élevée.

Les strates de tissu imprégnées sont empilées à plat et maintenues dans un outillage de façon à assurer un taux volumique de fibres de l'ordre de 40 %.

La préforme ainsi obtenue est placée dans un four d'infiltration chimique en phase vapeur pour être densifiée par une matrice en carbure de silicium suivant le même processus que celui décrit dans l'exemple 1.

Lors de la montée en température précédant le début de l'infiltration, l'ensimage des fibres ainsi que le produit d'imprégnation de la préforme sont tous deux pyrolysés, laissant un résidu en carbone.

Comme le montre la figure du dessin annexé, il se forme alors une première interphase carbone 11 autour des fibres élémentaires 10, et une deuxième interphase carbone 16 présentant quelques discontinuités, autour de chaque toron de fibres 15 constituant un fil de la préforme (sur la figure, seules quelques fibres élémentaires sont représentées, un fil étant habituellement formé par un grand nombre de fibres). Ceci est obtenu du fait que le produit d'imprégnation enrobe chaque fil, mais ne pénètre pas au sein de ceux-ci.

Ensuite, lors de la formation de la matrice, le carbure de silicium est infiltré au sein de la porosité accessible de la préforme, y compris au sein des fils ou torons 15. Il se forme alors une phase céramique 12 entre les interphases carbone 11 et 16 et une phase céramique 18 séparée de la phase 12 par l'interphase 16.

Un essai en traction est effectué sur le matériau composite à matrice séquencée ainsi obtenu. La mesure de la résistance à rupture en traction $\sigma_R$, du module d'élasticité E et de l'allongement à rupture en traction $\varepsilon_R$ donne les résultats suivants :

$$\sigma_R = 210 \text{ MPa}$$

$$E = 230 \text{ GPa}$$

$$\varepsilon_R = 0,7 \text{ \%}$$

Ces résultats montrent une amélioration notable du comportement en traction par rapport aux résultats donnés dans l'exemple 2 et l'exemple comparatif 2b.

L'exemple 3 montre la possibilité de réaliser simplement une séquence comprenant une première interphase carbone sur les fibres, une première phase céramique, une deuxième interphase carbone et une deuxième phase céramique. Le séquençage de la matrice pourrait bien entendu être poursuivi en alternant ensuite la formation d'une interphase et d'une phase céramique, les interphases pouvant être réalisées par imprégnation-pyrolyse ou par infiltration chimique en phase vapeur.

Bien entendu, un matériau composite à matrice séquencée pourrait être réalisé en formant l'interphase entre fibres et matrice suivant le procédé conforme à la présente invention, puis en formant successivement les différentes phases de la matrice, comme décrit dans la demande de brevet précitée FR 8 902 718.

Il est avantageux, pour des raisons d'économie, de réaliser le traitement thermique donnant l'interphase entre fibres et matrice et, éventuellement, une deuxième interphase lors de la montée en température précédant l'infiltration de la matrice céramique. Toutefois, ce traitement thermique pourra être réalisé de façon indépendante, non liée à l'opération de densification. Le traitement est alors effectué en atmosphère inerte (vide ou azote, par exemple).

Dans les exemples qui précèdent, la matrice céramique est formée par voie gazeuse (infiltration chimique en phase vapeur). Le procédé conforme à l'invention est également applicable au cas où la matrice céramique est formée par voie liquide, c'est-à-dire par imprégnation de la préforme au moyen d'un précurseur du matériau céramique de la matrice suivie d'un traitement thermique donnant ce matériau céramique par transformation céramisation du précurseur. La formation d'une matrice céramique par voie liquide est une technique bien connue.

Dans un tel cas, l'imprégnation par le précurseur peut être réalisée sur la préforme avec les fibres revêtues de l'ensimage. De la sorte, un même traitement thermique donne à la fois l'interphase entre fibres et matrice, par dégradation de l'ensimage, et le matériau céramique de la matrice, par transformation du précurseur. La densification de la préforme peut ensuite être poursuivie par voie liquide et/ou par voie gazeuse, éventuellement en alternant les dépôts pour obtenir une matrice séquencée.

L'imprégnation par le précurseur peut aussi être réalisée sur la préforme après formation de l'interphase fibres-matrice par un premier traitement thermique préalable indépendant. Il en est ainsi, en particulier, lorsque l'interphase carbone fibres-matrice et une deuxième interphase carbone sont d'abord réalisées comme expliqué dans l'exemple 3. L'imprégnation par le précurseur de la matrice est alors réalisée de manière à faire pénétrer le précurseur au sein de chaque fil ou toron de fibres formant la préforme. De la sorte, après un deuxième traitement thermique transformant le précurseur en céramique, on obtient deux phases céramique séparées par la deuxième interphase carbone. La densification peut ensuite être poursuivie par voie liquide et/ou gazeuse, éventuellement en séquençant la matrice.

## Revendications

1. Procédé pour la réalisation d'un matériau composite thermostructural comprenant la fabrication d'une préforme fibreuse à partir de fibres réfractaires revêtues d'un ensimage, et la densification de la préforme par une matrice réfractaire tout en ménageant une interphase carbone entre les fibres et la matrice,
caractérisé en ce qu'il comprend les étapes qui consistent à :

- utiliser des fibres réfractaires revêtues d'un agent d'ensimage en un matériau susceptible de laisser un résidu en carbone par dégradation thermique,
- réaliser la préforme fibreuse à partir des fibres réfractaires revêtues de l'agent d'ensimage,
- chauffer la préforme fibreuse afin d'obtenir l'interphase carbone sous forme d'un revêtement sur les fibres résultant de la dégradation thermique de l'agent d'ensimage, et
- densifier ensuite la préforme fibreuse par la matrice réfractaire.

2. Procédé selon la revendication 1, selon lequel la matrice est formée au moins en partie par infiltration chimique en phase vapeur du matériau constitutif de la matrice au sein de la préforme,
caractérisé en ce que la dégradation thermique de l'agent d'ensimage est réalisée lors de la montée en température en vue de l'infiltration chimique en phase vapeur.

3. Procédé selon la revendication 1, selon lequel la matrice est formée au moins en partie par imprégnation liquide de la préforme au moyen d'un précurseur de la matrice suivie d'un traitement thermique donnant le matériau de la matrice par transformation du précurseur,
caractérisé en ce que la préforme fibreuse est imprégnée par le précurseur de la matrice avant dégradation thermique de l'ensimage et est ensuite soumise à un traitement thermique donnant à la fois l'interphase carbone par dégradation de l'agent d'ensimage et le matériau de la matrice par transformation du précurseur.

4. Procédé pour la réalisation d'un matériau composite thermostructural comprenant la fabrication d'une préforme fibreuse à partir de fibres réfractaires revêtues d'un ensimage, et la densification de la préforme par une matrice séquencée au moins en partie céramique, avec une première interphase carbone entre les fibres et la matrice et au moins une deuxième interphase formée entre deux phases céramiques de la matrice,
caractérisé en ce qu'il comprend les étapes qui consistent à :

- utiliser des fibres réfractaires revêtues d'un agent d'ensimage en un matériau susceptible de laisser un résidu en carbone par dégradation thermique,
- réaliser la préforme fibreuse à partir des fibres réfractaires revêtues de l'agent d'ensimage formées en fils ou torons,
- imprégner la préforme fibreuse avec un précurseur du matériau de la deuxième interphase susceptible de donner le matériau de la deuxième interphase par traitement thermique, de sorte que chaque fil ou toron est revêtu par le précurseur,
- chauffer la préforme fibreuse imprégnée afin d'obtenir la première interphase carbone sous forme d'un revêtement sur les fibres résultant de la dégradation thermique de l'agent d'ensimage et d'obtenir la deuxième interphase par transformation du précurseur, ladite deuxième interphase présentant des discontinuités, et
- densifier ensuite la préforme fibreuse par la matrice céramique comprenant une première phase céramique au sein des fils ou torons entre la première interphase et la deuxième interphase, et une deuxième phase céramique séparée de la première par la deuxième interphase.

**5.** Procédé selon la revendication 4, caractérisé en ce que la préforme fibreuse est imprégnée par un précurseur de carbone.

**6.** Procédé selon l'une quelconque des revendications 4 et 5, selon lequel la matrice est formée au moins en partie par infiltration chimique en phase vapeur du matériau constitutif de la matrice au sein de la préforme, caractérisé en ce que la dégradation thermique de l'agent d'ensimage et la transformation du précurseur de la deuxième interphase sont réalisées lors de la montée en température en vue de l'infiltration chimique en phase vapeur.

**7.** Procédé selon l'une quelconque des revendications 4 et 5, caractérisé en ce qu'après formation de la première et de la deuxième interphases, la préforme est imprégnée par un précurseur liquide de la matrice céramique, y compris au sein de la porosité résiduelle de chaque fil ou toron et un nouveau traitement thermique est effectué pour obtenir la première et la deuxième phases céramiques de la matrice par transformation du précurseur.

**8.** Procédé selon l'une quelconque des revendications 1 à 7, caractérisé en ce que la préforme est réalisée à partir de fibres revêtues d'un ensimage choisi parmi les résines phénoliques, les résines acryliques et les résines cellulosiques.

**9.** Procédé selon l'une quelconque des revendications 1 à 8, caractérisé en ce que la préforme est réalisée à partir de fibres revêtues d'un ensimage constitué par une résine carboxyméthylcellulose.

**10.** Procédé selon l'une quelconque des revendications 4 à 7, caractérisé en ce que les fils ou torons de la préforme sont enrobés d'une résine choisie parmi les résines phénoliques, les résines acryliques et les résines cellulosiques.

**11.** Procédé selon l'une quelconque des revendications 4, 5, 6, 7 et 10, caractérisé en ce que les fils ou torons de la préforme sont enrobés d'une résine carboxyméthylcellulose.

**Claims**

**1.** Process for producing a thermostructural composite material comprising making a fibrous preform from refractory fibers coated with a sizing agent and densifying the preform with a refractory matrix while providing a carbon interphase between the fibers and the matrix, characterized in that it comprises the steps of:

- using refractory fibers coated with a sizing agent in a material adapted to leave a carbon residue by thermal decomposition,
- producing the fibrous preform from refractory fibers coated with the sizing agent,
- heating the fibrous preform so as to obtain the carbon interphase as a coating on the fibers resulting from the thermal decomposition of the sizing agent, and
- thereafter densifying the fibrous preform with the refractory matrix.

**2.** Process according to claim 1, in which the matrix is at least partially formed by chemical vapor infiltration of the material constituting the matrix within the preform, characterized in that the thermal decomposition of the sizing agent is produced during the rise in temperature intended for the chemical vapor infiltration.

**3.** Process according to claim 1, in which the matrix is at least partially formed by liquid impregnation of the preform by means of a precursor of the matrix, followed by a thermal treatment giving the material constituting the matrix by transformation of the precursor, characterized in that the fibrous preform is impregnated with the matrix precursor prior to thermal decomposition of the sizing agent and is thereafter subjected to a thermal treatment giving both the carbon interphase by decomposition of the sizing agent and the material constituting the matrix by transformation of the precursor.

**4.** Process for the production of a thermostructural composite material comprising making a fibrous preform from refractory fibers coated with a sizing agent, and densifying the preform with a part-ceramic sequenced matrix, with a first carbon interphase formed between the fibers and the matrix, and at least a second interphase formed between two ceramic phases of said matrix, characterized in that it comprises the steps of:

- using refractory fibers coated with a sizing agent in a material capable of leaving a carbon residue by thermal decomposition,
- producing the fibrous preform from refractory fibers coated with the sizing agent formed in threads or strands,
- impregnating the fibrous preform with a precursor of the material of the second interphase capable of giving the material of the second interphase by thermal treatment, so that each thread or strand is coated with the precursor,
- heating the impregnated fibrous preform in order to obtain the first carbon interphase in the form of a coating on the fibers resulting from the thermal decomposition of the sizing agent and to obtain the second interphase by transformation of the precursor, said second interphase having discontinuities, and

- thereafter densifying the fibrous preform by the ceramic matrix comprising a first ceramic phase within threads or strands between the first interphase and the second interphase, and a second ceramic phase separated from the first by the second interphase.

5. Process according to claim 4, characterized in that the fibrous preform is impregnated with a carbon precursor.

6. Process according to any one of claims 4 and 5, in which the matrix is at least partially formed by chemical vapor infiltration of the material constituting the matrix within the preform, characterized in that the thermal decomposition of the sizing agent and the transformation of the precursor of the second interphase are achieved during the rise in temperature intended for the chemical vapor infiltration.

7. Process according to any one of claims 4 and 5, characterized in that after formation of the first and second interphases, the preform is impregnated with a liquid precursor of the ceramic matrix, including within the residual porosity of each thread or strand and a new thermal treatment is conducted in order to obtain the first and second ceramic phases of the matrix by transformation of the precursor.

8. Process according to any one of claims 1 to 7, characterized in that the preform is made from fibers coated with a sizing agent selected from phenolic resins, acrylic resins and cellulose resins.

9. Process according to any one of claims 1 to 8, characterized in that the preform is produced from fibers coated with a sizing agent constituted by a carboxymethylcellulose resin.

10. Process according to any one of claims 4 to 7, characterized in that the strands or threads of the preform are coated with a resin selected from phenolic resins, acrylic resins and cellulose resins.

11. Process according to any one of claims 4, 5, 6, 7 and 10, characterized in that the strands or threads of the preform are coated with a carboxymethylcellulose resin.

**Patentansprüche**

1. Verfahren zur Herstellung eines bei erhöhter Temperatur tragfähigen Verbundwerkstoffs, aufweisend die Herstellung einer faserigen Vorform ausgehend von hitzebeständigen, mit einer Schmälze beschichteten Fasern und die Verdichtung der Vorform durch eine hitzebeständige Matrix, wobei eine Kohlenstoff-Zwischenphase zwischen den Fasern und der Matrix vorgesehen wird,
**dadurch gekennzeichnet,**
daß es die folgenden Schritte aufweist:

- Verwenden von hitzebeständigen Fasern, die beschichtet sind mit einem Schmälzmittel aus einem Material, das geeignet ist, beim thermischen Abbau einen Rückstand aus Kohlenstoff zu hinterlassen,
- Herstellen der faserigen Vorform ausgehend von den hitzebeständigen, mit dem Schmälzmittel beschichteten Fasern,
- Erwärmen der faserigen Vorform, um die Kohlenstoff-Zwischenphase in Form einer Beschichtung auf den Fasern als Ergebnis des thermischen Abbaus des Schmälzmittels zu erhalten, und
- daraufhin Verdichten der faserigen Vorform durch die hitzebeständige Matrix.

2. Verfahren nach Anspruch 1, bei dem die Matrix mindestens teilweise durch chemisches Eindringen in der Dampfphase des die Matrix bildenden Materials ins innere der Vorform gebildet wird,
**dadurch gekennzeichnet,**
daß der thermische Abbau des Schmälzmittels verwirklicht wird zur Zeit des Ansteigens der Temperatur anläßlich des chemischen Eindringens in der Dampfphase.

3. Verfahren nach Anspruch 1, bei dem die Matrix mindestens zum Teil durch Flüssigimprägnierung der Vorform mittels eines Vorläufers der Matrix, gefolgt von thermischer Behandlung, welche durch Umwandlung des Vorläufers das Material der Matrix ergibt, gebildet wird,
**dadurch gekennzeichnet,**
daß die faserige Vorform vor dem thermischen Abbau der Schmälze mit dem Vorläufer der Matrix imprägniert wird und daraufhin einer thermischen Behandlung unterzogen wird, die auf einmal die Kohlenstoff-Zwischenphase durch Abbau des Schmälzmittels und das Matrixmaterial durch Umwandlung des Vorläufers ergibt.

4. Verfahren zur Herstellung eines bei erhöhter Temperatur tragfähigen Verbundwerkstoffs, aufweisend die Herstellung einer faserigen Vorform ausgehend von hitzebeständigen, mit einer Schmälze beschichteten Fasern und die Verdichtung der Vorform durch eine mindestens zum Teil keramische, mehrgliedrige Matrix, mit einer ersten Kohlenstoff-Zwischenphase zwischen den Fasern und der Matrix und mindestens einer zweiten Zwischenphase, die zwischen zwei keramischen Phasen der Matrix ausgebildet ist,
**dadurch gekennzeichnet,**
daß es folgende Schritte aufweist;

- Verwenden von hitzebeständigen Fasern, die beschichtet sind mit einem Schmälzmittel aus einem Material, das geeignet ist, durch thermischen Abbau einen Rückstand aus Kohlenstoff zu hinterlassen,
- Herstellen der faserigen Vorform ausgehend von zu Fäden oder Litzen geformten, hitzebeständigen, mit einem Schmälzmittel beschichteten Fasern,
- Imprägnieren der faserigen Vorform mit einem Vorläufer des Materials der zweiten Zwischenphase, der geeignet ist, das Material der zweiten Zwischenphase durch thermische Behandlung zu ergeben, dergestalt, daß jeder Faden oder jede Litze mit dem Vorläufer beschichtet wird,
- Erwärmen der imprägnierten faserigen Vorform, um die erste Kohlenstoff-Zwischenphase in Form einer Beschichtung auf den Fasern als Ergebnis des thermischen Abbaus des Schmälzmittels zu erhalten und um die zweite Zwischenphase durch Umwandlung des Vorläufers zu erhalten, wobei die zweite Zwischenphase Diskontinuitäten aufweist, und
- daraufhin Verdichten der faserigen Vorform durch die keramische Matrix, die eine erste keramische Phase im Inneren der Fäden oder Litzen zwischen der ersten Zwischenphase und der zweiten Zwischenphase und eine zweite, von der ersten durch die zweite Zwischenphase getrennte, keramische Phase aufweist.

5. Verfahren nach Anspruch 4,
**dadurch gekennzeichnet,**
daß die faserige Vorform mit einem Kohlenstoff-Vorläufer imprägniert wird.

6. Verfahren nach Anspruch 4 oder 5,
bei dem die Matrix mindestens zum Teil durch chemisches Eindringen in der Dampfphase des die Matrix bildenden Materials ins Innere der Vorform gebildet wird,
**dadurch gekennzeichnet,**
daß der thermische Abbau des Schmälzmittels und die Umwandlung des Vorläufers der zweiten Zwischenschicht zur Zeit der Temperaturerhöhung anläßlich des chemischen Eindringens in der Dampfphase verwirklicht werden.

7. Verfahren nach Anspruch 4 oder 5,
**dadurch gekennzeichnet,**
daß nach Bildung der ersten und der zweiten Zwischenphase die Vorform mit einem flüssigen Vorläufer der keramischen Matrix imprägniert wird, einschließlich ins Innere der Restporosität jedes Fadens oder jeder Litze, und daß eine neue thermische Behandlung durchgeführt wird, um die erste und die zweite keramische Phase der Matrix durch Umwandlung des Vorläufers zu erhalten.

8. Verfahren nach einem der Ansprüche 1 bis 7,
**dadurch gekennzeichnet,**
daß die Vorform hergestellt wird aus Fasern, die beschichtet sind mit einer aus Phenolharzen, Acrylharzen und Zelluloseharzen ausgewählten Schmälze.

9. Verfahren nach einem der Ansprüche 1 bis 8,
**dadurch gekennzeichnet,**
daß die Vorform hergestellt wird aus Fasern, die beschichtet sind mit einer aus einem Carboxymethylzelluloseharz bestehenden Schmälze.

10. Verfahren nach einem der Ansprüche 4 bis 7,
**dadurch gekennzeichnet,**
daß die Fäden oder Litzen der Vorform umhüllt werden mit einem aus Phenolharzen, Acrylharzen und Zelluloseharzen ausgewähltem Harz.

11. Verfahren nach einem der Ansprüche 4, 5, 6, 7 und 10,
**dadurch gekennzeichnet,**
daß die Fäden oder Litzen der Vorform mit einem Carboxymethylzelluloseharz umhüllt werden.